**Europäisches Patentamt**

**European Patent Office**

**Office européen des brevets**

(19)

(11) Veröffentlichungsnummer : **0 328 755 B1**

(12) **EUROPÄISCHE PATENTSCHRIFT**

(45) Veröffentlichungstag der Patentschrift :
04.09.91 Patentblatt 91/36

(51) Int. Cl.⁵ : **B60T 15/42**

(21) Anmeldenummer : **88120251.9**

(22) Anmeldetag : **05.12.88**

(54) **Beschleunigungsvorrichtung an indirekt wirkender Druckluftbremse.**

(30) Priorität : 17.02.88 CH 583/88

(43) Veröffentlichungstag der Anmeldung :
23.08.89 Patentblatt 89/34

(45) Bekanntmachung des Hinweises auf die
Patenterteilung :
04.09.91 Patentblatt 91/36

(84) Benannte Vertragsstaaten :
AT BE CH DE ES FR GB IT LI NL SE

(56) Entgegenhaltungen :
DE-B- 1 263 808
FR-A- 2 165 928
FR-E- 62 619

(73) Patentinhaber : Oerlikon-Knorr
Eisenbahntechnik AG
Birchstrasse 155
CH-8050 Zürich (CH)

(72) Erfinder : Epp, Niklaus
Friedackerstrasse 11
CH-8153 Rümlang (CH)
Erfinder : Fischer, Pius
Ifangstrasse 70
CH-8153 Rümlang (CH)
Erfinder : Deutsch, Heinz
Meisenweg 11
CH-8600 Dübendorf (CH)

(74) Vertreter : Hunziker, Kurt
c/o Werkzeugmaschinenfabrik
Oerlikon-Bührle AG Birchstrasse 155
CH-8050 Zürich (CH)

## Beschreibung

Beschleunigungsvorrichtung an indirekt wirkender Druckluftbremse

Die Erfindung betrifft eine Beschleunigungsvorrichtung an indirekt wirkender Druckluftbremse, insbesondere für Eisenbahnfahrzeuge, mit einem Abzapfventil, mit einem über ein ausklinkbares Zwischenglied wirkenden Betätigungsorgan zum Öffnen des Abzapfventiles und mit einer über das Ventil an die Hauptluftleitung angeschlossenen und über eine Drosselbohrung entlüfteten Kammer (Siehe z.B. DE-B-1263808).

Bei der bekannten Beschleunigungsvorrichtung dieser Art ist als Zwischenglied ein zweiarmiger Hebel schwenkbar am Betätigungsorgan angelenkt. Der obere Arm des Hebels ist gegabelt. Die eine Gabelzinke wirkt mit einer Führungsstange des Abzapfventiles zusammen und die andere Gabelzinke wirkt mit einem Unterbrecherkolben zusammen. Der Hebel ist um einen Bolzen schwenkbar. Eine Feder, die sich auf den unteren Arm abstützt, hat das Bestreben, den zweiarmigen Hebel in seine eingeklinkte Stellung zu schwenken. Durch den Unterbrecherkolben kann der zweiarmige Hebel ausgeklinkt werden.

Dieser bekannte Hebel ist schwierig herzustellen und schwierig einzubauen und soll daher durch ein anderes Organ ersetzt werden, das einfacher herzustellen und einfacher einzubauen ist.

Diese Aufgabe wird erfindungsgemäss dadurch gelöst, dass das ausklinkbare Zwischenglied als ein rotationssymmetrischer Stössel ausgebildet und durch eine Feder in seiner Wirkstellung gehalten ist.

Ein Ausführungsbeispiel der erfindungsgemässen Beschleunigungsvorrichtung ist im folgenden anhand der beigefügten Zeichnung ausführlich beschrieben. Es zeigt :

Fig. 1      einen Axialschnitt durch eine Beschleunigunsvorrichtung,

Fig. 2      eine Ansicht eines Stössels.

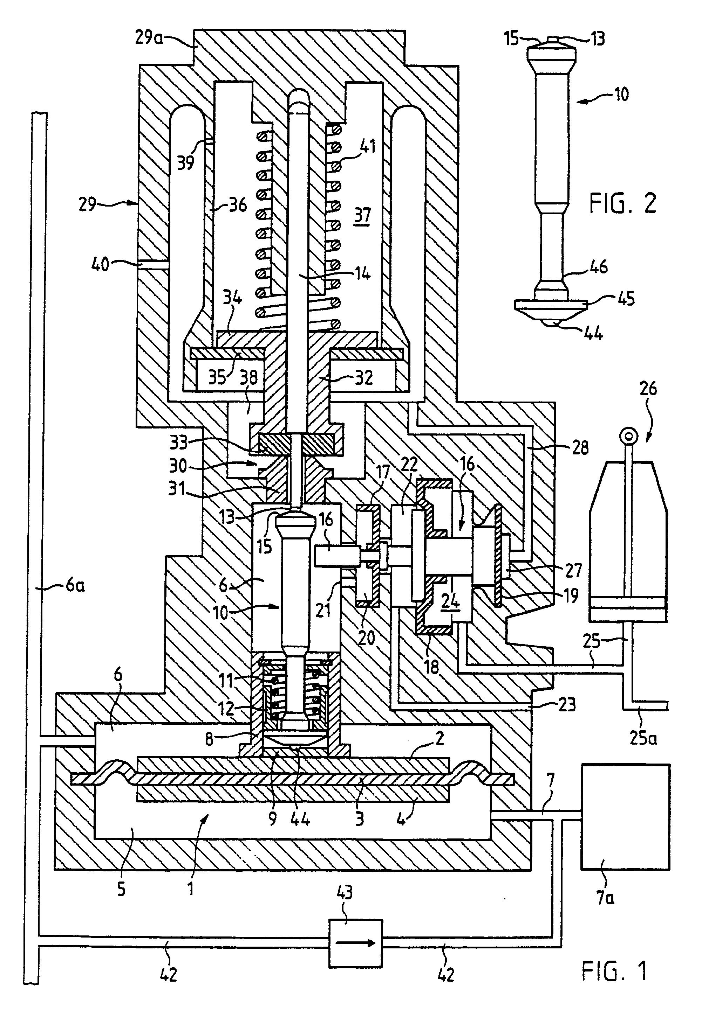

Gemäss Fig. 1 weist die Beschleunigungsvorrichtung ein Betätigungsorgan 1 auf, mit einem Kolben 2, an dem eine Membrane 3 befestigt ist. Unterhalb der Membrane 3 ist ein plattenförmiger Teil 4 des Kolbens 2 sichtbar. Durch die Membrane 3 ist ein zylindrischer Raum in zwei Kammern 5 und 6 unterteilt. Die untere Kammer 5 ist über eine Leitung 7 mit einem Steuerluftbehälter 7a verbunden. Die obere Kammer 6 ist mit der Hauptluftleitung 6a verbunden. Am Rande des Kolbens 2 ist eine Hülse 8 befestigt, in welcher sich ein Stössel 10 auf einer Pfanne 9 abstützt. Eine Feder 11 hat das Bestreben, über eine zweite, verschiebbare Hülse 12 den Stössel 10 gegen die Pfanne 9 zu drücken und dabei den Stössel 10 in der gezeigten vertikalen Stellung zu halten. Über einem Nocken 13 (siehe Fig. 2) dieses Stössels 10 befindet sich eine Führungsstange 14, die zu einem weiter unten beschriebenen Abzapfventil 30 gehört. Ein Unterbrecherkolben 16 stützt sich seitlich ebenfalls auf den Stössel 10 ab. Mit diesem Unterbrecherkolben 16 kann der Stössel 10 aus dem Bereich der Führungsstange 14 herausgeschwenkt werden, wie weiter unten noch ausführlicher dargelegt ist. Am Unterbrecherkolben liegen drei Membranen 17, 18 und 19 an. Links der ersten Membrane 17 ist eine Kammer 20 über eine Bohrung 21 mit der Kammer 6 verbunden, welche, wie bereits erwähnt, mit der Hauptluftleitung 6a in Verbindung steht. Zwischen den Membranen 17 und 18 ist eine weitere Kammer 22 über eine Leitung 23 mit der Aussenluft (Atmosphäre) verbunden. Zwischen den Membranen 18 und 19 ist eine Kammer 24 über eine Leitung 25 mit dem Bremszylinder 26 verbunden. Rechts der dritten Membrane 19 ist eine Kammer 27 über eine Leitung 28 mit einer Kammer 38 in einem Gehäuse 29 verbunden, das weiter unten beschrieben ist. Zwischen der an die Hauptluftleitung 6a angeschlossenen Kammer 6 und dem Gehäuse 29 ist ein Abzapfventil 30 vorgesehen, das einen Ventilsitz 31 und einen Ventilkörper 32 aufweist. Am Ventilkörper 32 ist eine Dichtungsscheibe 33 befestigt, welche bei geschlossenem Ventil 30 auf den Ventilsitz 31 aufliegt. Der Ventilkörper 32 ist mit einem auf der Führungsstange 14 festsitzenden Kolben 34 verbunden, an dem eine Membrane 35 anliegt. Diese Membrane 35 ist am unteren Ende eines Zylinders 36 befestigt, der eine Kammer 37 umschliesst, der in das Gehäuse 29 hineinragt und am oberen Ende am Gehäuse 29 befestigt ist. Die Membrane 35 unterteilt somit das Gehäuse 29 in die beiden Kammern 37 und 38. Diese beiden Kammern 37 und 38 sind durch eine Drosselstelle 39 miteinander verbunden. Die äussere Kammer 38 ist über eine Drosselbohrung 40 mit der Aussenluft verbunden. Eine Feder 41, welche sich einerseits am Kolben 34 und anderseits am Deckel 29a des Gehäuses 29 abstützt, hat das Bestreben, den Kolben 34 nach unten zu schieben und dabei den Ventilkörper 32 gegen den Ventilsitz 31 zu drücken, sodass das Abzapfventil 30 geschlossen ist.

Der Steuerluftbehälter 7a ist über eine Leitung 42, in der ein Abschlussventil 43 vorgesehen ist, mit der Hauptluftleitung 6a verbunden. Der Bremszylinder 26 ist über eine Leitung 25a mit dem nicht dargestellten Hauptsteuerorgan verbunden.

Gemäss Fig. 2 weist der Stössel 10 an seinem oberen Ende den bereits erwähnten Nocken 13 auf, der über eine Kegelfläche 15 des Stössels 10 hinausragt. Solange der Stössel 10 gemäss Fig. 1 sich in seiner vertikalen Stellung befindet, kann sich die Führungsstange 14 des Abzapfventiles 30 auf diesem Nocken 13 abstützen. Wenn durch den Unterbrecherkolben 16 der Stössel 10 schräggestellt wird, wird die Führungsstange 14 zuerst vom Nocken 13 und anschliessend von der Kegelfläche 15 freigegeben. Der Stössel 10 weist ferner an seinem unteren Ende eine kugelförmige Abrundung 44 auf, sowie einen kegelförmigen Teller 45. Die bereits erwähnte verschiebbare Hülse 12 wird durch die Feder 11 gegen diesen Teller 45 gedrückt und hat dabei das Bestreben, den Stössel 10 in seine vertikale Stellung zu schwenken. In seinem unteren Teil weist der Stössel 10 eine Aussparung 46 auf, damit beim Schrägstellen des Stössels 10 dieser nicht gegen die Hülse 12 stösst.

Die Wirkungsweise der beschriebenen Beschleunigungvorrichtung ist wie folgt :

Bei gelöster Bremse ist der Luftdruck im Steuerdruckbehälter 7a gleich dem Luftdruck in der Hauptluftleitung 6a. Der Kolben 2 befindet sich in seiner untersten Stellung. In der Kammer 20 herrscht derselbe Luftdruck wie in der Hauptluftleitung 6a, während in den Kammern 22, 24 und 27 Aussenluftdruck (Atmosphäre) herrscht. Der Kolben 16 befindet sich somit in seiner rechten Endstellung. Der Stössel 10 wird durch die Feder 11 in seiner vertikalen Stellung gehalten. Der Nocken 13 befindet sich unter der Führungsstange 14. Das Abzapfventil 30 ist unter der Wirkung der Feder 41 geschlossen. Die beiden Kammern 37 und 38 sind entlüftet.

Beim Bremsen wird in üblicher Weise der Druck in der Hauptluftleitung 6a gesenkt. Der Luftdruck in der Kammer 6 über dem Kolben 2 des Betätigungsorganes 1 wird kleiner als der Luftdruck in der Kammer 5, in welcher derselbe Druck wie im Steuerluftbehälter 7a herrscht. Somit hebt sich der Kolben 2 mit dem Stössel 10. Der Nocken 13 stösst die Führungsstange 14 nach oben und der Ventilkörper 32 wird mit der Führungsstange 14 entgegen der Wirkung der Feder 41 angehoben, wodurch sich das Abzapfventil 30 öffnet. Die Luft aus der Hauptluftleitung 6a strömt aus der Kammer 6 in die Kammer 38 des Beschleunigungsgehäuses 29 und entweicht durch die Drosselstelle 40 ins Freie. Auf die Membrane 35 wirkt ein Luftdruck, der das Ventil 30 offenhält. Aus der Kammer 38 fliesst Luft durch die Leitung 28 in die Kammer 27 und drückt gegen die Membrane 19. Der auf die Membrane 19 wirkende Luftdruck bewirkt eine Verschiebung des Kolbens 16 nach links, wodurch der Stössel 10 verschwenkt wird und der Nocken 13 ausser Eingriff mit der Führungsstange 14 gelangt. Durch die eingeleitete Bremsung bildet sich in an sich bekannter Weise im Bremszylinder 26 ein Bremsdruck. Dieser Bremsdruck überträgt sich durch die Leitung 25 und die Kammer 24 auf die Membrane 18 und hält den Kolben 16 in seiner linken Endstellung. Der Kolben 16 bleibt in dieser Lage, bis die Bremse gelöst wird.

Während der Luftdruck in der Hauptluftleitung um den für das Ansprechen des Steuerventiles notwendigen Betrag fällt, baut sich durch die Drosselstelle 39 ein Druck in der Kammer 37 auf, der auf den Kolben 34 wirkt. Dieser Druck wird durch die Kraft der Feder 41 unterstützt, sodass sich der Kolben 34 senkt und das Ventil 30 geschlossen wird.

Während des Lösens der Bremse steigt der Druck in der Hauptluftleitung 6a wieder auf den Regeldruck an. Dabei gelangt der Kolben 2 wieder in seine dargestellte Ausgangslage. Gleichzeitig entleert sich der Bremszylinder 26 und auch der Kolben 16 gelangt in seine dargestellte Ausgangslage. Wie lange das Abzapfventil 30 beim Bremsvorgang geöffnet bleibt, hängt bei dieser Einrichtung lediglich von den Abmessungen der Drosselstellen 39 und 40 ab und nicht mehr von der Grösse der Beschleunigungskammer 38. Eine Regulierung der Beschleunigungsvorrichtung wird dadurch wesentlich erleichtert.

Falls jedoch in kurzen zeitlichen Abständen mehrmals hintereinander gebremst wird, dann kann es sein, dass sich die Bremse noch nicht vollständig gelöst hat. Dies bedeutet insbesondere, dass sich der Kolben 2 noch nicht in seine unterste Stellung zurückbewegt hat. Der Bremszylinder 26 — und somit über Leitung 25 auch die Kammer 24 — sind bereits entlüftet und der Kolben 16 hat sich bereits nach rechts in Fig. 1 verschoben. Daher wird nun die Kegelfläche 15 gegen die Führungsstange 14 stossen. Somit wird bei wiederholtem Bremsen das Abzapfventil 30 nicht wie beim ersten Mal durch den Nocken 13 geöffnet, sondern durch die Kegelfläche 15. Je nach der Stellung des Kolbens 2 wird sich daher die Führungsstange 14 mehr in der Mitte oder mehr am Rande der Kegelfläche 15 abstützen. Die Kegelfläche 15 gewährleistet, dass unabhängig von der Stellung des Kolbens 2 und somit von der axialen Stellung des Stössels 10 bei der Freigabe des Stössels 10 durch den Kolben 16 die Kegelfläche 15 die Führungsstange 14 abstützen kann und somit ein wiederholtes Öffnen des Abzapfventiles 30 gewährleistet ist.

## Patentansprüche

1. Beschleunigungsvorrichtung an indirekt wirkender Druckluftbremse, insbesondere für Eisenbahnfahrzeuge, mit einem Abzapfventil (30), mit einem über ein ausklinkbares Zwischenglied (10) wirkenden Betätigungsorgan (1) zum Öffnen des Abzapfventiles (30) und mit einer über das Abzapfventil (30) an die Hauptluftleitung (6a) angeschlossenen und über eine Drosselbohrung (40) entlüfteten Kammer (38), dadurch gekennzeichnet, dass das ausklinkbare Zwischenglied (10) als ein rotationssymmetrischer Stössel (10) ausgebildet ist und durch eine Feder (11) in seiner Wirkstellung gehalten ist.

2. Beschleunigungsvorrichtung nach Anspruch 1, dadurch gekennzeichnet, dass das Zwischenglied (10) an seinem einen Ende eine kugelförmige Abrundung (44) aufweist und sich in einer entsprechenden Pfanne (9) des Betätigungsorganes (1) abstützt.

3. Beschleunigungsvorrichtung nach Anspruch 1, dadurch gekennzeichnet, dass das Zwischenglied (10) an seinem anderen Ende eine Kegelfläche (15) aufweist, über die ein Zapfen (13) hervorsteht, über dem sich bei eingeklinktem Zwischenglied (10) die Führungsstange (14) des Abzapfventiles (30) befindet.

## Claims

1. Accelleration device at an indirectly operating compressed-air brake, in particular for railway vehicles, comprising a bleed valve (30), an operating element (1) which operates via a disconnectable intermediate member (10) for opening the bleed valve (30), and with a chamber (38) which is connected via the drain valve (30) to the main airline (6a) and vacated via a choke bore (40), **characterised in that** the disconnectable intermediate member (10) is constructed as a rotation-symmetrical tappet (10) and held in its operative position by a spring (11).

2. Accelleration device according to claim 1, **characterised in that** the intermediate member (10) has a spherical rounding-off shape (44) at its end and supports itself in a respective pan (9) of the operating element (1).

3. Accelleration device according to claim 1, **characterised in that** the intermediate member (10) has at its other end a conical surface (15) with a pin (13) protruding therefrom, with the guide rod (14) of drain valve (30) placed thereabove when the intermediate member (10) is connected.

## Revendications

1. Dispositif d'accélération pour un frein à air comprimé à action indirecte, notamment pour des véhicules ferroviaires, comportant une soupape de prise (30) avec un organe de manoeuvre (1) agissant par un organe intermédiaire (10) déverrouillable pour ouvrir la soupape de prise (30) et une chambre (38) reliée à la conduite principale d'air (6a) par la soupape de prise (30) et évacuée par un perçage d'étranglement (40), dispositif caractérisé en ce que l'organe intermédiaire déverrouillable (10) est un poussoir (10) à symétrie de rotation maintenu en position active à un ressort (11).

2. Dispositif d'accélération selon la revendication 1, caractérisé en ce que l'organe intermédiaire (10) comporte à une de ses extrémités, une partie arrondie sphérique (44) qui s'appuie dans une coupelle correspondante (9) de l'organe de manoeuvre (1).

3. Dispositif d'accélération selon la revendication 1, caractérisé en ce que l'organe intermédiaire (10) comporte à son autre extrémité une surface conique (15) avec en saillie une came (13) au-dessus de laquelle se trouve la tige de guidage (14) de la soupape de prise (30) lorsque l'organe intermédiaire (10) est verrouillé.

FIG. 2

FIG. 1